# EUROPEAN PATENT SPECIFICATION

(11) **EP 3 105 542 B1**
(45) Date of publication and mention of the grant of the patent: **11.03.2020**
(21) Application number: 15711837.3
(22) Date of filing: 11.02.2015
(51) Int. Cl.: G01N 21/952, G01B 11/04, G01N 21/95, G01N 21/88

(54) **APPARATUS FOR ACQUIRING IMAGES OF ELEMENTS TO BE INSPECTED AND METHOD OF INSPECTIONS OF SUCH ELEMENTS**
VORRICHTUNG ZUR BILDAUFNAHME VON ZU UNTERSUCHENDEN BAUELEMENTEN UND VERFAHREN ZUR UNTERSUCHUNG DIESER BAUELEMENTE
DISPOSITIF POUR LA PRISE DES IMAGES DES ÉLÉMENTS À EXAMINER ET PROCÉDÉ D'EXAMEN DES TELS ÉLÉMENTS

(30) Priority: 11.02.2014 IT MI20140193
(43) Date of publication of application: 21.12.2016
(73) Proprietor: UTPVision S.r.l., 24044 Dalmine (IT)
(72) Inventor: FINAZZI, Roberto, I-24060 Bolgare (IT); MONTAGNA, Alessandro, I-24059 Urgnano (IT)
(74) Representative: De Bortoli, Tiziano
(86) International application number: PCT/IB2015/051020
(87) International publication number: WO 2015/121803

(56) References cited:
- EP-A1- 2 392 896
- DE-B3-102012 100 987
- US-A1- 2013 258 046

## Description

### FIELD OF THE INVENTION

The present invention relates to an apparatus for acquiring images of elements to be inspected, to a test equipment for elements to be inspected, as well as to a method of inspections of such elements.

### BACKGROUND ART

As is known, inspection is an important step in the industrial production of devices and components, and sometimes it is referred to as "quality control". The inspection is aimed at identifying manufacturing defects in order to discard any devices which are affected therefrom. Some categories of devices or components must be free from any kind of defect, otherwise their functionality and effectiveness of use may be compromised. Fixing means and components which in use are subjected to high stresses are examples of devices for which a rigorous inspection is required. Among the known techniques, the technique of inspection using images is particularly interesting. According to this technique, a plurality of images of the element to be inspected is acquired; the images acquired are then analyzed to identify possible defects. The dimensional and shape features of the element to be inspected require acquiring images from different framing angles to obtain meaningful information therefrom on the presence of possible defects. For example, if the element to be inspected is a screw, its shape and symmetry dictate that images of at least two opposite sides are acquired, such as the right side and the left side, for example. In this case, at least two cameras acquire images of the two corresponding sides. However, the cameras must not interfere with each other during the acquisition of images, for example if two cameras are used, the second one must not occupy the field of view of the first one while this acquires images of the element to be inspected.

The inspection process is usually fully automated, and a conveyor belt is used to convey the elements to be inspected. Such a belt conveys the elements from a loading area, where the elements are laid on the belt, to an inspection area, where the cameras acquire the images of the element under inspection, up to an unloading area where the elements are divided according to the outcome of the inspection.

At the inspection area, the cameras must be installed taking into account the above-mentioned constraints, i.e. so that during the image acquisition they do not interfere with each other. In order to overcome the constraints imposed, two solutions have found application: in one case, a single camera mounted on an arm movable around the conveyor belt is used, the camera is thus moved from one side to the other of the belt in order to acquire the two different sides of the element to be inspected. In another case, two cameras installed at the two different sides of the belt and in two different points of the inspection area are used. During transport, the element to be inspected crosses the field of view of the first camera, which acquires one or more images, and then that of the second camera, which in turn acquires one or more images. Therefore, the two cameras must be properly installed in the two points of the inspection area so as not to interfere with each other.

In the first case, the movable arm is a very complex articulated element, the operation of which needs to be configured with extreme care, especially in relation to the camera acquisition moments. In the second case, the installation of the two cameras in the two different locations requires plenty of space available. Document DE102012100987 describes an apparatus for acquiring images of an object to be inspected and more specifically intended for inspecting bottles. The apparatus is provided with four optical units in front of the object. Each optical unit comprises three distinct elements: a camera, a light source and a surface which is switchable between a condition of transparency and a condition of diffusion of the light source. In particular, each switchable surface includes a liquid crystal which comprises an electrode and which is interposed between a pair of transparent adhesive films and a pair of glasses, according to a sandwich configuration. A control unit drives the electrode of the switchable surface by providing or not a voltage to its terminals. Simultaneously and correspondingly, the control unit activates or not the light source placed in a background position with respect to the switchable surface. The condition of transparency of the switchable surface is thus switched to a condition of diffusion of the light source (which condition is referred to as backlighting).

The apparatus described in DE102012100987 has large overall dimensions. As mentioned above, each optical unit comprises three distinct elements. In order to obtain acceptable images, such elements need to be placed apart from one another. The light source must be arranged at a certain distance from the switchable surface. Such a distance constrains the camera position with respect to the switchable surface. It is apparent that the subject apparatus requires a large installation space. It is also noted that in the solution of DE102012100987, the light source cannot be installed on the same optical axis as the camera so as not to obstruct the field of view thereof. Therefore, the light source must necessarily be arranged in a considerably distant position or shifted by a significant angle with respect to the position of the switchable surface. In both cases, it was seen that the effectiveness of the light source is very low.

Moreover, the optical configuration described requires a field of view which is actually only suitable for objects of a size comparable to or larger than that of a bottle (as exemplified in DE102012100987). For much smaller-sized objects (e.g. toroidal (O-ring) seals, mechanical parts such as screws, bolts, etc.), the definition offered by the optical configuration proposed in DE102012100987 would not be sufficient to detect small defects. In addition, for the particular location of the elements of the optical unit, the light rays provided by the light source impinge on the switchable surface in a little uniform manner due to the different relative distance between the diffusive surface and the illuminator, due to lack of coaxiality. Therefore, the images may be locally overexposed or underexposed, and thus not suitable for later analysis by means of *post-processing.*

### SUMMARY

It is the general task of the present invention to implement an apparatus for acquiring images of elements to be inspected which allows the above problems to be solved in a simple and cost-effective manner.

It is a first specific object of the present invention to provide an apparatus for acquiring images of elements to be inspected which reduces the complexity of installation on board the inspection unit for which it is intended.

It is a second specific object of the present invention to provide an apparatus for acquiring images of elements to be inspected which allows the relevant inspection process to be optimized.

The inventive idea underlying the present invention relates to an apparatus for acquiring images of elements to be inspected which, through a different and original configuration of its components, allows the overall dimensions to be reduced and the inspection process to be optimized.

Therefore, the invention relates to an apparatus for acquiring images of an element to be inspected, which includes a first optical unit, in turn comprising:
- first image acquisition means in front of a first side of the element and adapted to acquire at least one image of such a first side;
- first screening means interposed between the first acquisition means and the first side, and adapted to selectively screen the first acquisition means.

The device according to the invention further includes a second optical unit, in turn comprising:
- second image acquisition means in front of a second side, opposite to the first side of the element and adapted to acquire at least one image of the second side;
- second screening means interposed between the second acquisition means and the second side, and adapted to selectively screen the second acquisition means. The apparatus according to the invention further includes a control unit operatively connected to the first acquisition means, to said first screening means, to said second acquisition means and to said second screening means.

According to the invention, the first optical unit and the second optical unit are aligned along a common optical axis.

Moreover, the control unit is configured to simultaneously activate the first acquisition means and the second screening means according to a first activation mode, and to simultaneously deactivate the first acquisition means and the second screening means according to a first deactivation mode. The control unit is further configured to simultaneously activate the second acquisition means and the first screening means according to a second activation mode, and to simultaneously deactivate the second acquisition means and the first screening means according to a second deactivation mode.

According to the present invention, the control unit controls the first activation mode, the first deactivation mode, the second activation mode and the second deactivation mode according to a predetermined sequence in order to obtain images of the first side and of the second side of the element.

Moreover, according to the present invention, the first screening means and/or the second screening means comprise an optical device, respectively, in turn comprising a plate-like body provided with colorless and light-diffusing impurities, the impurities adapted to change the optical path of an input light beam which crosses the plate-like body; the optical device further comprises at least one LED coupled to the plate-like body, the at least one LED generating the input light.

### LIST OF FIGURES

Further features and advantages of the present invention will become more apparent from the following detailed description, given by way of a non limiting example and shown in the accompanying drawings, in which:
- figure 1 shows a diagram of a first embodiment of an apparatus according to the present invention;
- figures 2 and 3 show two operating steps of an apparatus according to the present invention to obtain images of an element to be inspected;
- figure 4 shows an embodiment of a component of the apparatus according to the present invention;
- figures 5 and 6 show the component in figure 4 in two different operating steps;
- figure 7 shows a diagram of a third embodiment of an apparatus according to the present invention.

### DETAILED DESCRIPTION

Both the description and the drawings are to be considered only for illustrative and thus not limiting purposes; therefore, the present invention may be implemented according to other and different embodiments; moreover, it should be noted that such figures are schematic and simplified.

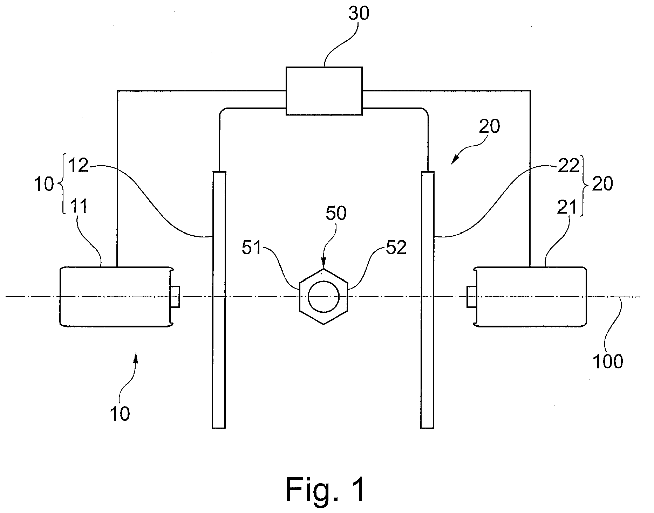

With reference to figure 1, an apparatus for acquiring images of an element to be inspected is shown, comprising:
- a first optical unit 10, in turn comprising:
   - first image acquisition means 11 in front of a first side 51 of element 50 and adapted to acquire at least one image of such a first side 51;
   - first screening means 12 interposed between the first acquisition means 11 and the first side 51, and adapted to selectively screen the first acquisition means 11;
- a second optical unit 20, in turn comprising:
   - second image acquisition means 21 in front of a second side 52, opposite to the first side 51 of element 50, and adapted to acquire at least one image of the second side 52;
   - second screening means 22 interposed between the second acquisition means 21 and the second side 52, and adapted to selectively screen the second acquisition means 21.

For the purposes of the present invention, the term "selectively" means that, depending on their activation/deactivation, the screening means (12 or 22) screen or do not screen corresponding acquisition means (21, 11).

According to the invention, the first optical unit 10 and the second optical unit 20 are aligned along a common optical axis 100. The first acquisition means 11 and the second acquisition means 22 are simultaneously activated according to a first activation mode, and simultaneously deactivated according to a first deactivation mode. In turn, the second acquisition means 21 and the first acquisition means 12 are simultaneously activated according to a second activation mode, and simultaneously deactivated according to a second deactivation mode. According to the present invention, the first activation mode, the first deactivation mode, the second activation mode and the second deactivation mode occur in a predetermined sequence in order to obtain images of the first side 51 and of the second side 52 of element 50. As will be better described hereafter, the apparatus comprises a control unit 30 connected to the acquisition means 11, 21 and to the screening means 12, 22 and configured to control the above-described activation and deactivation modes.

For the purposes of the present invention and as will become more apparent hereafter, the expression "*first activation mode*" means an operating condition in which the first acquisition means 11 acquire images of the first side 51, while the second screening means 22 optically screen the second acquisition means 21. On the other hand, the expression "*first deactivation mode*" means an operating condition in which the first acquisition means 11 do not acquire images of the first side 51, while the second screening means 22 are optically transparent. Likewise, the expression "*second activation mode*" means an operating condition in which the second acquisition means 21 acquire images of the second side 52, while the first screening means 12 optically screen the first acquisition means 11. On the other hand, the expression "*second deactivation mode*" means an operating condition in which the second acquisition means 21 do not acquire images of the second side 52, while the first screening means 12 are optically transparent.

According to a preferred embodiment, the operating sequence is controlled in the following order:
A - second deactivation mode, in which the second acquisition means 21 and the first screening means 12 are deactivated;
B - first activation mode, in which the first acquisition means 11 are activated to acquire images of the first side 51, and the second screening means 22 are activated to screen the second acquisition means 21;
C - first deactivation mode, in which the first acquisition means 11 and the second screening means 22 are deactivated;
D - second activation mode, in which the second acquisition means 21 are activated to acquire images of the second side 52, and the first screening means 12 are activated to screen the first acquisition means 11.

The steps of sequence A and B are preferably carried out simultaneously (A-B), as well as steps C and D are implemented simultaneously (C-D), i.e. in a synchronized manner. More precisely, the steps of each pair (A-B or C-D) can be controlled simultaneously, but also in non-simultaneous manner. In the practice, according to the invention, each (first or second) activation mode always corresponds to a (second or first) deactivation mode.

Using a sequence carried out in the described order A-B, C-D, images of the first side 51 and of the second side 52 are sequentially obtained. By changing the order of the sequence, for example by carrying out the steps in the following order C-D, A-B, images of the second side 52 and of the first side 51 are obtained. According to an embodiment, steps A-B and C-D in the sequence described occur in a time sequence of less than 0.5 seconds. Steps A-B and C-D in the sequence preferably occur in a time sequence of about 0.001 s (i.e. 1 millisecond). Such an aspect is particularly advantageous in that the acquisition of images of the two different opposite sides of an element to be inspected can occur almost simultaneously.

Element 50 shown in the figure is a screw, however the inspection by means of the apparatus according to the invention may be carried out on any other element (e.g. mechanical hardware, O-ring seals, buttons, bottle caps, etc.) for which an image acquisition control is required.

As mentioned, the first optical unit 10 and the second optical unit 20 of the apparatus according to the present invention are aligned on a common optical axis 100, hereafter also referred to as reference axis 100. Advantageously, the apparatus according to the present invention is particularly compact since no misalignments of the first optical unit with respect to the second one are required to acquire the images of the two opposite sides of an element under inspection. In other words, unlike traditional solutions, the screening means 12, 22 can be placed on the optical axis and almost in contact with the corresponding acquisition means 11, 21, thus achieving a particularly compact configuration.

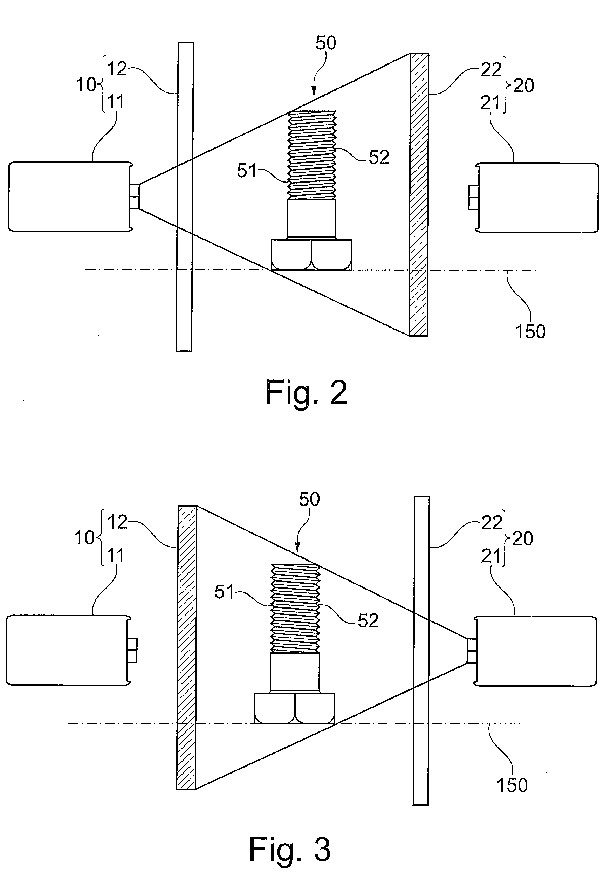

According to a first possible embodiment, also shown in figures 2 and 3, the reference axis 100 is parallel to the lying plane 150 of element 50 when the latter is under inspection, i.e. when the images of the first and second sides 51 and 52 are being acquired. In the example in Figure 1, the lying plane (not shown) substantially corresponds to the plane of the sheet.

In an alternative embodiment (not shown in the figures), the optical axis intersects the lying plane of the element to be inspected. In this regard, in the case of flat elements such as O-ring seals or buttons, the first optical unit may be arranged above the lying plane on which the elements are resting; on the other hand, the second optical unit will be installed underneath the same plane which must be of transparent material. In this embodiment, the optical alignment axis will be preferably orthogonal to the lying plane.

The common reference axis 100 on which the first and second optical units 10 and 20 are aligned implies that the first optical unit 10 is in front of the second optical unit 20, and vice versa. Such a configuration would lead to a mutual (visual) interference during the respective image acquisition steps. To this end, the first screening means 12 and the second screening means 22 are selectively activated to screen the first acquisition means 11 and the second acquisition means 21, respectively.

The first screening means 12 and the second screening means 22 are activated in a condition in which they create a background for the "opposite" acquisition means. In other words, the first screening means 12 create a screen to the benefit of the second acquisition means 21, and the second screening means 22 create a background screen to the benefit of the first acquisition means 11. Moreover, they are deactivated according to a condition in which they are transparent, i.e. they allow the "synchronized" acquisition means to acquire images of the respective side of the element to be inspected. In other words, the first screening means 12 are transparent to the benefit of the first acquisition means 11 when they acquire images of the first side 51, and the second screening means 22 are transparent to the benefit of the second acquisition means 21 when they acquire images of the second side 52.

As already mentioned above, the apparatus according to the present invention comprises a control unit 30 connected to the first optical unit 10 and to the second optical unit 20. More specifically, the control unit 30 is connected to the first acquisition means 11 and to the first screening means 12 of the first optical unit 10, and to the second acquisition means 21 and to the second screening means 22 of the second optical unit 20. The control unit 30 is further configured to control the first activation mode, the first deactivation mode, the second activation mode and the second deactivation mode and to obtain images of the element 50 to be inspected. In other words, the control unit 30 is configured to carry out the above-described sequence (A, B, C, D or C, D, A, B).

To this end, the control unit 30 comprises storage means for storing the images thus obtained and making them available for later processing aimed to determine the presence of defects in element 50.

Figures 2 and 3 show a process of acquiring images of element 50 by means of an apparatus according to the present invention. In the embodiment in figures 2 and 3, the activation and deactivation modes of the first optical unit 10 and of the second optical unit 20 are controlled by the control unit 30 (not shown only for ease of illustration). Figure 2 shows a first step of the acquisition process aimed to acquire images of the first side 51 of element 50. In this first step, the first acquisition means 11 and the second screening means 22 are in the first activation mode; and the second acquisition means 21 and the first screening means 12 are in the second deactivation mode.

Figure 3 shows a second step of the acquisition process aimed to acquire images of the second side 52 of element 50. In this second step, the first acquisition means 11 and the second screening means 22 are in the first deactivation mode; and the second acquisition means 21 and the first screening means 12 are in the second activation mode.

According to an embodiment, the images of the first side and the images of the second side are stored in unit 30 for further processing, according to the image inspection techniques.

It should be noted that the term *"image",* referred to the first and second images acquired by the first and second acquisition means 11, 21 may refer to a plurality of images which are the first and second images, respectively, or a plurality of related frames (i.e., a video). The resolution of the images in the first case and of the frames in the second case is selected when designing the apparatus, depending on the requirements of the desired image inspection technique.

The first acquisition means 11 and the second acquisition means 21 are provided with a plurality of optical characteristics (exposure time, optical sensor resolution, etc.) including a predetermined field of view. The term field of view refers to the area which is viewed (and so acquired) by the acquisition means from their point of installation.

According to a preferred embodiment shown in figures 2 and 3, the first screening means 12 and the second screening means 22 have such an extension as to contain the field of view of the second acquisition means 21 and of the first acquisition means 11, respectively. In other words, the area of the screening means 12, 22 is sufficient to cover the field of view of the corresponding acquisition means so that nothing behind the screening means which are active at that time visually interferes with the acquisition process.

The installation distance between the acquisition means 11, 21 and element 50 at which they are placed and their surface are sized to contain the fields of view of means 11 and 21 within the extension of the corresponding screening means 12, 22. Thereby, the screening means 12, 22 provide each time an effective background screen to make the image acquisition free from noise.

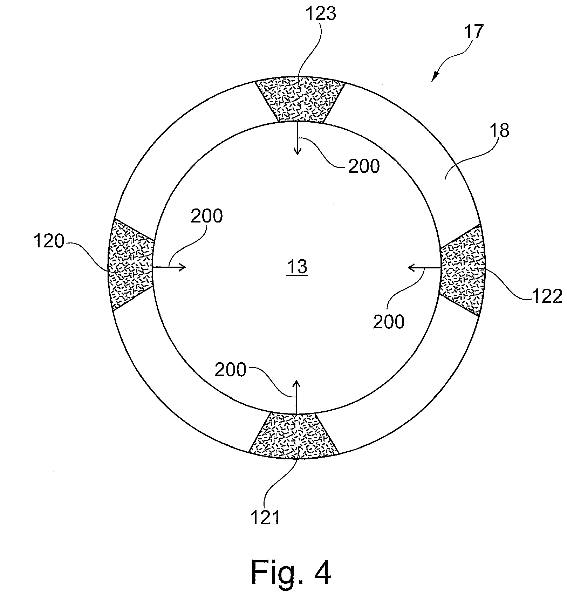

Figure 4 shows a preferred embodiment of the first screening means 12. The same features and considerations also apply to the second screening means 22, not described or shown for conciseness.

As shown in figure 4, the first screening means 12 comprise an optical device 17. The optical device 17 in turn comprises a plate-like body 13 (hereafter also referred to as diffusive plate 13) in which colorless and light-diffusing impurities are present. Such impurities are adapted to modify the optical path of an input light beam which crosses the plate-like body 13. The expression "plate-like body" or the term "plate" is intended to indicate a body which develops between two surfaces, of greater extension, which are substantially flat and parallel to each other. On the other hand, the term "transversely" indicates a set of possible directions along which the input light beam crosses the plate-like body and in which such directions are substantially and preferably parallel to the flat development surfaces.

In particular, the plate-like body 13 consists of a transparent plate made of polymethylmethacrylate (PMMA), and the colorless and light-diffusing impurities consist of special colorless and light diffusing particles of polymethylmethacrylate (PMMA). The plate-like body 13 is also operatively coupled to at least one LED 120, 121, 122, 123. The at least one LED coupled to the plate-like body supplies an input light beam to the plate-like body 13; the presence of PMMA particles modifies due to refraction and diffraction the path of the light beam which crosses the plate-like body 13, a uniform brightness being thus generated on the surface of the plate-like body 13. The at least one LED is configured to supply the light beam which transversely crosses the plate-like body 13, i.e. in the direction indicated by reference numerals 200. Therefore, screening means (i.e. the plate-like body 13 with PMMA particles incorporated) and the light source (i.e. LEDs 120, 121, 122, 123) are advantageously integrated in the optical device 17.

The optical device 17 also includes a peripheral frame 18 which surrounds the plate-like body 13 providing the body itself with support. Said at least one LED 120, 121, 122, 123 is preferably installed/integrated in the peripheral frame 18. Therefore, the plate-like body 13 is supported by the peripheral frame 18 and is operatively coupled to at least one LED 120, 121, 122, 123 installed in the frame itself.

The optical device 17 preferably comprises a plurality of LEDs 120, 121, 122 and 123 coupled to the plate-like body 13 and preferably installed/integrated in the peripheral frame 18. Therefore, unlike the conventional solutions, in the apparatus according to the invention, the light source (LED) takes the same position as the diffusive plate 13, with considerable advantages in terms of compactness. In fact, the screening means (i.e. the diffusive plate 13 and the light source-LED) may be advantageously arranged on the optical axis 100 of the apparatus in a position very close to the corresponding acquisition means and/or to the element 50 to be examined.

More precisely, LEDs 120, 121, 122 and 123 are installed on the peripheral frame 18 so that the light beams produced are oriented according to the directions indicated by reference numerals 200, respectively, to generate a uniform brightness on the surface of the plate-like body 13 in front of the first or second side of element 50.

According to a preferred embodiment shown in the figures, the plate-like body 13 preferably has a circular shape, and the peripheral frame 18 is defined by an annular edge which surrounds the plate-like body 13. LEDs 120, 121, 122 and 123 are installed so that the light beams generated therefrom are oriented as much as possible towards the center of the plate-like body.

The possibility to configure the optical device 17 in a different manner from that described and claimed falls within the scope of the present invention. In particular, the plate-like body and the peripheral frame 18 can take, for example, a rectangular or square shape. In all cases and for all the possible geometries, the LEDs must be installed/distributed evenly along the peripheral frame so as to illuminate the plate-like body 13 in a homogeneous manner. This results in an equally homogenous illumination of the plate-like body 13.

Advantageously, the plate-like body 13 configured as above, the LEDs 120-123 and the PMMA particles synergistically produce the effects of integrating the screening means in a single element and evenly illuminating the surface of the plate-like body 13. With this configuration, the physical distance between the acquisition means and the object to be inspected can be advantageously reduced. Accordingly, the magnification of the image increases, thus reducing the field of view with a consequent increase in image resolution. Unlike the conventional solutions, this allows very small sized objects to be inspected while maintaining an acceptable resolution. Moreover, a uniform illumination ensures the right exposure. Thereby, a subsequent step of *post-processing* the information content of the images thus obtained allows the detection of even the smallest defects of element 50 to be inspected. As said, such an optical device modifies its surface brightness according to the light beams which cross it. The plate-like body 13 of the optical device 17, when the LED (or LEDs) does/do not emit light, is transparent (corresponding to the deactivation modes). When the LEDs are active, i.e. when they emit light, the plate-like body 13 of the optical device 17 has a surface brightness comparable to that of a background illuminator (corresponding to the activation modes). Advantageously, the screening means 12, 22 thus designed visually screen the objects installed behind them, moreover they produce a background lighting for the camera which captures images at that time, thus improving the quality of the images. Better quality images so obtained allow more efficient processing in order to better identify the manufacturing defects in element 50.

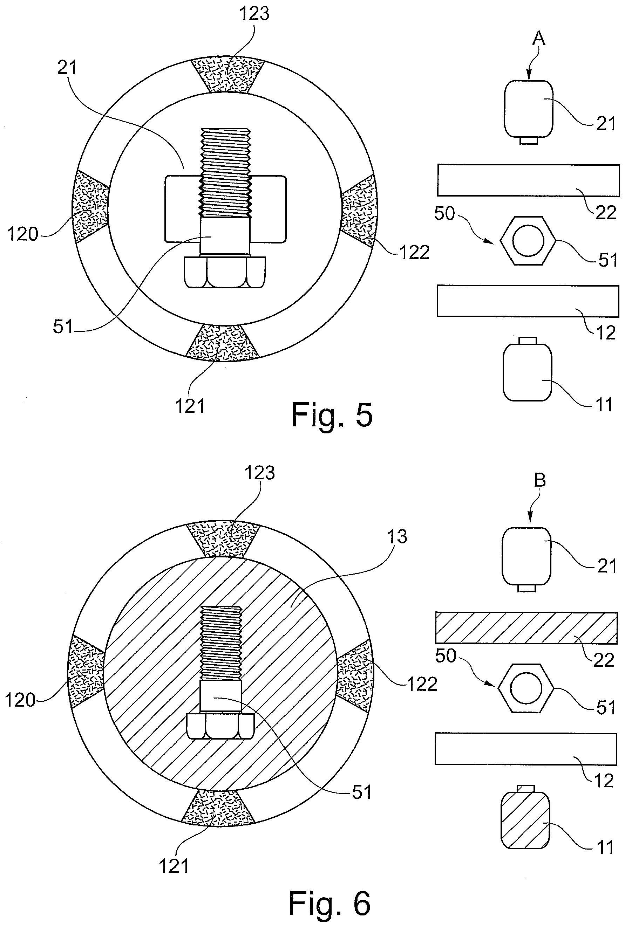

Figures 5 and 6 allow a better understanding of the description of the optical device 17, and in particular how its optical behavior is utilized to carry out an acquisition process by means of an apparatus according to the present invention. The point of view of figures 5 and 6 is the same as the first acquisition means 11.

Figure 5 shows an embodiment of the first screening means 12 comprising an optical device 17 which includes four LEDs 120, 121, 122 and 123.

In figure 5, as shown by reference A, the apparatus according to the present invention comprises first acquisition means 11, second acquisition means 21, first screening means 12 and second screening means 22, all in the deactivation mode. Such a deactivation mode is obtained with LEDs 120, 121, 122 and 123 of both the first and second screening means 12 and 22 being inactive (i.e. they do not emit light), thereby both screening means are transparent. Therefore, in this condition, the first acquisition means 11 are in front of the first side 51 of element 50 and in front of the second acquisition means 21. Conversely, the second acquisition means 21 are in front of the second side 52 of element 50 (opposite to the first side 51 and therefore not shown in figure 5) and in front of the first acquisition means 11.

In figure 6, as shown in the apparatus indicated with reference B, the first acquisition means 11 and the second screening means 22 are in their activation mode (shown for this purpose with oblique filling lines). Such an activation mode is obtained with LEDs 120, 121, 122 and 123 of the second screening means 22 being active (i.e. they emit light), which in turn allow the optical device 17 to become a light emitter and create a homogeneous bright background. In fact, again as shown in figure 6, the first acquisition means 11 can acquire images of the first side 51 of element 50 without visual interference.

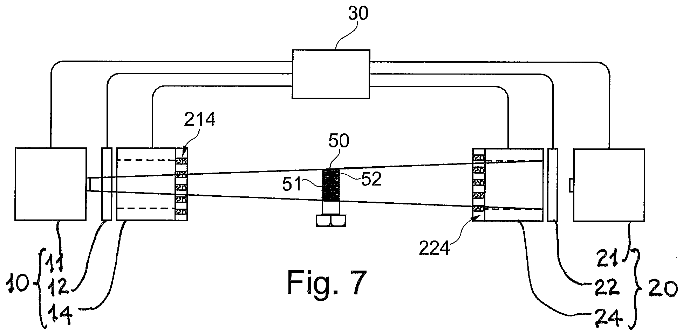

As indicated above, the first screening means 12 and the second screening means 22 are controlled by unit 30. According to an embodiment, the control unit 30 controls the (first or second) activation mode by activating the LEDs of corresponding (first or second) screening means, and controls a (second or first) deactivation mode by deactivating the LEDs of the other screening means. In this sense, unit 30 performs such operations in a synchronized manner with the activation and deactivation of the acquisition means 11, 21 to properly acquire the images of the first and second sides 51, 52. In particular, according to this embodiment, the activation/deactivation of the LEDs of the screening means and the activation/deactivation of the acquisition means take into account the transition times of the optical devices to switch from the transparent to the reflecting condition. Figure 7 shows a further embodiment of an apparatus according to the present invention. This embodiment differs from that in figure 1 due to the presence of a first illuminator 14 in front of the first side 51 of element 50 and in front of the first screening means 12 (i.e. interposed between element 50 and the first screening means 12); and the presence of a second illuminator 24 in front of the second side 52 of element 50 and in front of the second screening means 22 (i.e. interposed between element 50 and the second screening means 22). The first illuminator 14 and the second illuminator 24 allow images of the first side 51 and of the second side 52 to be illuminated with direct light and of superior graphic quality (e.g. images with higher brightness and better contrast).

Moreover, it should be noted that the illuminators may be arranged in a different order than that described and shown without any impact on the acquisition process or compromises on the quality of the images of element 50 obtained. In practice, in addition to what described and shown, the first illuminator 14 may be interposed between the first acquisition means 11 and the first screening means 12 (and thus have the following installation order: first acquisition means 11 - first illuminator 14 - first screening means 12). Likewise, the second illuminator 24 may be interposed between the second acquisition means 21 and the second screening means 21 (and thus have the following installation order: second acquisition means 21 - second illuminator 24 - second screening means 21).

In a preferred embodiment, the first illuminator 14 and/or the second illuminator 24 may include an internally hollow, cylindrical support body. Such a body supports a crown of LEDs 214, 224 oriented so as to illuminate a corresponding side 51, 52 of element 50 to be examined. Illuminators 14 and 24 are aligned along the optical axis 100 defined by the alignment of the optical units 10, 20 of the apparatus. In essence, for each illuminator 14, 24 the axis of the cylindrical support body, i.e. the axis of the crown of LEDs, is aligned with the optical axis 100.

The field of view of the acquisition means 11, 21 is determined so as to be contained within the circular space defined by the crown of LEDs. For example, in the case of the second illuminator 24, the field of view (dashed diverging lines in figure 7) of the first acquisition means 11 is determined so as to be contained within the space encompassed by the crown of LEDs 224 of the second illuminator 24 itself. Therefore, when the control unit 30 controls the first activation mode, the second illuminator 24 cannot be seen by the acquisition means 11 which, however, can see the second screening means 22 activated. Similar considerations must be considered valid for the first illuminator 12 in relation to the second acquisition means 21.

The first illuminator 14 and the second illuminator 24 are also connected to the control unit 30, which controls the activation (light emission from the crown of LEDs) or deactivation thereof. In particular, the control unit 30 controls the activation of the first illuminator 14 simultaneously with the control of the first activation mode (i.e. activation of the first acquisition means 11 and of the second screening means 22) and controls the deactivation of the first illuminator 14 itself simultaneously with the control of the first deactivation mode (i.e. deactivation of the first acquisition means 11 and of the second screening means 22).

Moreover, the control unit 30 controls the activation of the second illuminator 24 simultaneously with the control of the second activation mode (i.e. activation of the second acquisition means 21 and of the first screening means 12) and controls the deactivation of the second illuminator 24 itself simultaneously with the control of the second deactivation mode (i.e. deactivation of the second acquisition means 21 and of the first screening means 12).

Therefore, in the presence of the illuminators and according to principles similar to those set out above, the control unit 30 performs the following sequence:
A - second deactivation mode, in which the control unit deactivates the second acquisition means 21, the second illuminator 24 and the first screening means 12;
B - first activation mode, in which the control unit activates the first acquisition means 11 to acquire images of the first side 51, the first illuminator 14 to illuminate the first side 51, and the second screening means 22 to screen the second acquisition means 21;
C - first deactivation mode, in which the control unit 30 deactivates the first acquisition means 11, the first illuminator 14 and the second screening means 22;
D - second activation mode, in which the control unit 30 activates the second acquisition means 21 to acquire images of the second side 52, the second illuminator 24 to illuminate the second side 52, and the first screening means 12 to screen the first acquisition means 11.

Again with reference to the embodiment in figure 7, it is noted that due to the configuration of the above-described screening means 11, 21 (i.e. the use of the optical device comprising LED and diffusive plate 13), the illuminators 14, 24 can be placed in a position which is very close to the diffusive plate 13 and/or to the element 50 to be inspected. This results in a considerable lighting efficiency and therefore a high quality of the images acquired. Furthermore, compared to the conventional solutions, the integrated configuration of the screening means 11, 21 allows a considerable simplification of the driving devices.

The present invention further relates to a method of acquiring images of an element to be inspected, wherein first acquisition means 11 and first screening means 12 are provided in front of a first side 51 of the element and interposed between said first acquisition means and said first side 51, and wherein second acquisition means 21 and second screening means 22 are provided in front of a second side 52 of element 50, opposite to said first side 51 and interposed between said second acquisition means and said second side 52 of said element to be inspected. In particular, the method comprises the steps of:
a) activating the second screening means 22 for screening the second acquisition means 21;
b) activating the first acquisition means 11 for acquiring images of the first side;
c) deactivating the first acquisition means 11;
d) deactivating the second screening means 22;
e) activating the first screening means 12 for screening the first acquisition means 11;
f) activating the second acquisition means 21 for acquiring images of the second side;
g) deactivating the second acquisition means 21;
h) deactivating the first screening means 12.

The method according to the invention includes carrying out the above-mentioned steps a)-h) using the first screening means 11 and/or the second screening means 21 comprising an optical device 17 which includes a plate-like body 13 provided with colorless and light-diffusing impurities, wherein such impurities are sufficient to modify the optical path of an input light beam which crosses the plate-like body and wherein the light beam is generated by at least one LED operatively coupled to the plate-like body.

The above method may further comprise the additional step of storing the images of the two sides obtained in steps a) and h) in appropriate means.

The present invention also relates to a test equipment for elements to be inspected comprising an image acquisition apparatus according to the present invention, as described above.

## Claims

1. An apparatus for obtaining images of an element (50) to be inspected, comprising:
- a first optical unit (10), in turn comprising:
- first image acquisition means (11) facing a first side (51) of said element (50) and adapted to acquire at least one image of said first side (51);
- first screening means (12) interposed between said first acquisition means (11) and said first side (51), and adapted to selectively screen said first acquisition means (11);
- a second optical unit (20), in turn comprising:
- second image acquisition means (21) facing a second side (52), opposite to said first side (51) of said element (50), and adapted to acquire at least one image of said second side (52);
- second screening means (22) interposed between said second acquisition means (21) and said second side (52), and adapted to selectively screen said second acquisition means (21);
- a control unit (30) operatively connected to said first acquisition means (12) and to said first screening means (12) and operatively connected to said second acquisition means and to said second screening means (12);
wherein said first optical unit (10) and said second optical unit (20) are aligned along a common optical axis (100);
wherein said control unit (30) activates said first acquisition means (11) and said second screening means (22) according to a first activation mode, and deactivates said first acquisition means (11) and said second screening means (22) according to a first deactivation mode;
wherein said control unit (30) activates said second acquisition means (21) and said first screening means (12) according to a second activation mode, and deactivates said second acquisition means (21) and said first screening means (12) according to a second deactivation mode;
wherein said control unit controls said first activation mode, said first deactivation mode, said second activation mode and said second deactivation mode according to a predetermined sequence in order to obtain images of said first side (51) and of said second side (52) of said element (50), and
**characterized in that** said first screening means (12) and/or said second screening means (22) comprise an optical device (17), in turn comprising a plate-like body (13) provided with colorless and light-diffusing impurities, said impurities being adapted to change the optical path of an input light beam which crosses said plate-like body (13), said optical device (17) further comprising at least one LED (120, 121, 122, 123) coupled to said plate-like body (13), said at least one LED (120, 121, 122, 123) generating said input light beam.

2. An apparatus according to claim 1, wherein said optical device (17) comprises a peripheral frame (18) surrounding said plate-like body (13) defining a support for the same, said at least one LED being installed in said peripheral frame (18).

3. An apparatus according to claim 1, wherein said optical device (17) comprises a plurality of LEDs and a peripheral frame (18) surrounding said plate-like body (13) defining a support for the same, wherein the LEDs of said plurality of LEDs are installed in said peripheral frame (18).

4. An apparatus according to claim 1, wherein said predetermined sequence is in the following order:
A - second deactivation mode;
B - first activation mode;
C - first deactivation mode;
D - second activation mode.

5. An apparatus according to claim 4, wherein steps A and B of said sequence are simultaneously controlled and/or wherein said steps C and D of said sequence are simultaneously controlled.

6. An apparatus according to claim 4, wherein images of said first side (51) are obtained by means of said first optical unit (10) in said first activation mode, and images of said second side (51) are obtained by means of said second optical unit (20) in said second activation mode.

7. An apparatus according to any one of the preceding claims, wherein said first screening means (12) and said second screening means (22) are adapted to contain the field of view of said second acquisition means (21) and of said first acquisition means (11), respectively.

8. An apparatus according to any one of the preceding claims, wherein said first activation mode, said first deactivation mode, said second activation mode, said second deactivation mode occur in a time sequence of less than 0.5 seconds.

9. An apparatus according to any one of claims 1 to 8, wherein said apparatus comprises a first illuminator (14) interposed between said element (50) and said first screening means (12), and a second illuminator (24) interposed between said second side (52) of the element (50) and said second screening means (22), said control unit (30) being connected to said illuminators (14,24) in order to activate/deactivate them.

10. An apparatus according to any one of claims 1 to 8, wherein said apparatus comprises a first illuminator (14) interposed between said first acquisition means (11) and said first screening means (12), and a second illuminator (24) interposed between said second acquisition means (21) and said second screening means (22), said control unit (30) being connected to said illuminators (14,24) to activate/deactivate them.

11. An apparatus according to claim 9 or 10, wherein said control unit (30) simultaneously deactivates said first acquisition means (11), said first illuminator (14) and said second screening means (22) according to a first deactivation mode, and simultaneously activates said first acquisition means (11), said first illuminator (14) and said second screening means (22) according to a first activation mode, wherein said control unit (30) deactivates said second acquisition means (21), said second illuminator (24) and said first screening means (12) according to a second deactivation mode, and simultaneously activates said second acquisition means (21), said second illuminator (24) and said first screening means (12) according to a second activation mode.

12. A method of acquiring images of an element (50) to be inspected, wherein there are provided first acquisition means (11) and first screening means (12) facing a first side (51) of said element (50) and interposed between said first acquisition means (11) and said first side (51) of said element (50), second acquisition means (21) and second screening means (22) facing a second side (52), opposite to said first side (51) of said element and interposed between said second acquisition means (11) and said second side (52) of said element (50), said method comprising the steps of:
a) activating said second screening means (22) for screening said second acquisition means (21);
b) activating said first acquisition means (11) for acquiring images of said first side (51);
c) deactivating said first acquisition means (11);
d) deactivating said second screening means (22);
e) activating said first screening means (12) for screening said first acquisition means (11);
f) activating said second acquisition means (21) for acquiring images of said second side;
g) deactivating the second acquisition means (21);
h) deactivating the first screening means (12),
**characterized in that** said method includes using said first screening means (12) and/or said second screening means (22) comprising an optical device (17), in turn comprising a plate-like body (13) provided with colorless and light-diffusing impurities, said impurities being adapted to change the optical path of an input light beam which crosses said plate-like body (13), said optical device (17) further comprising at least one LED (120, 121, 122, 123) coupled to said plate-like body (13), said at least one LED (120, 121, 122, 123) generating said input light beam.

13. Test equipment for elements to be inspected comprising an image acquisition apparatus according to any of the claims from 1 to 11.

## Patentansprüche

1. Vorrichtung zur Aufnahme von Bildern eines zu prüfenden Elements (50), umfassend:
- eine erste optische Einheit (10), die wiederum umfasst:
- eine erste Bilderfassungseinrichtung (11), die einer ersten Seite (51) des Elements (50) zugewandt ist und ausgelegt ist, um mindestens ein Bild der ersten Seite (51) aufzunehmen;
- eine erste Abschirmvorrichtung (12), die zwischen der ersten Erfassungseinrichtung (11) und der ersten Seite (51) angeordnet und ausgelegt ist, um die erste Erfassungseinrichtung (11) selektiv abzuschirmen;
- eine zweite optische Einheit (20), die wiederum umfasst:
- eine zweite Bilderfassungseinrichtung (21), die einer zweiten Seite (52) gegenüber der ersten Seite (51) des Elements (50) zugewandt ist und ausgelegt ist, um mindestens ein Bild der zweiten Seite (52) aufzunehmen;
- eine zweite Abschirmvorrichtung (22), die zwischen der zweiten Erfassungseinrichtung (21) und der zweiten Seite (52) angeordnet ist und ausgelegt ist, um die zweite Erfassungseinrichtung (21) selektiv abzuschirmen;
- eine Steuereinheit (30), die mit der ersten Erfassungseinrichtung (12) und der ersten Abschirmvorrichtung (12) funktionsfähig verbunden und mit der zweiten Erfassungseinrichtung und der zweiten Abschirmvorrichtung (12) funktionsfähig verbunden ist;
wobei die erste optische Einheit (10) und die zweite optische Einheit (20) entlang einer gemeinsamen optischen Achse (100) ausgerichtet sind;
wobei die Steuereinheit (30) die erste Erfassungseinrichtung (11) und die zweite Abschirmvorrichtung (22) gemäß einem ersten Aktivierungsmodus aktiviert und die erste Erfassungseinrichtung (11) und die zweite Abschirmvorrichtung (22) gemäß einem ersten Deaktivierungsmodus deaktiviert;
wobei die Steuereinheit (30) die zweite Erfassungseinrichtung (21) und die erste Abschirmvorrichtung (12) gemäß einem zweiten Aktivierungsmodus aktiviert und die zweite Erfassungseinrichtung (21) und die erste Abschirmvorrichtung (12) gemäß einem zweiten Abschaltmodus deaktiviert;
wobei die Steuereinheit den ersten Aktivierungsmodus, den ersten Deaktivierungsmodus, den zweiten Aktivierungsmodus und den zweiten Deaktivierungsmodus gemäß einer vorbestimmten Sequenz steuert, um Bilder der ersten Seite (51) und der zweiten Seite (52) des Elements (50) zu erhalten, und
**dadurch gekennzeichnet, dass** die erste Abschirmvorrichtung (12) und/oder die zweite Abschirmvorrichtung (22) eine optische Vorrichtung (17) umfassen, wiederum umfassend einen plattenförmigen Körper (13), der mit farblosen und lichtstreuenden Unreinheiten versehen ist, wobei die Unreinheiten ausgelegt sind, um den optischen Weg eines Eingangslichtstrahls zu ändern, der den plattenförmigen Körper (13) durchquert, wobei die optische Vorrichtung (17) ferner mindestens eine LED (120, 121, 122, 123) umfasst, die mit dem plattenförmigen Körper (13) gekoppelt ist, wobei die mindestens eine LED (120, 121, 122, 123) den Eingangslichtstrahl erzeugt.

2. Vorrichtung nach Anspruch 1, wobei die optische Vorrichtung (17) einen Umfangsrahmen (18) umfasst, der den plattenförmigen Körper (13) umgibt und einen Träger für diesen definiert, wobei die mindestens eine LED in dem Umfangsrahmen (18) installiert ist.

3. Vorrichtung nach Anspruch 1, wobei die optische Vorrichtung (17) eine Vielzahl von LEDs und einen Umfangsrahmen (18) umfasst, der den plattenförmigen Körper (13) umgibt und einen Träger für diesen definiert, wobei die LEDs der Vielzahl von LEDs in dem Umfangsrahmen (18) installiert sind.

4. Vorrichtung nach Anspruch 1, wobei die vorbestimmte Sequenz in der folgenden Reihenfolge ist:
A - zweiter Deaktivierungsmodus;
B - erster Aktivierungsmodus;
C - erster Deaktivierungsmodus;
D - zweiter Aktivierungsmodus.

5. Vorrichtung nach Anspruch 4, wobei die Schritte A und B der Sequenz gleichzeitig gesteuert werden und/oder wobei die Schritte C und D der Sequenz gleichzeitig gesteuert werden.

6. Vorrichtung nach Anspruch 4, wobei Bilder der ersten Seite (51) mittels der ersten optischen Einheit (10) in dem ersten Aktivierungsmodus erhalten werden und Bilder der zweiten Seite (51) mittels der zweiten optischen Einheit (20) in dem zweiten Aktivierungsmodus erhalten werden.

7. Vorrichtung nach einem der vorstehenden Ansprüche, wobei die erste Abschirmvorrichtung (12) und die zweite Abschirmvorrichtung (22) ausgelegt sind, das Sichtfeld der zweiten Erfassungseinrichtung (21) bzw. der ersten Erfassungseinrichtung (11) zu enthalten.

8. Vorrichtung nach einem der vorstehenden Ansprüche, wobei der erste Aktivierungsmodus, der erste Deaktivierungsmodus, der zweite Aktivierungsmodus, der zweite Aktivierungsmodus und der zweite Deaktivierungsmodus in einer Zeitfolge von weniger als 0,5 Sekunden auftreten.

9. Vorrichtung nach einem der Ansprüche 1 bis 8, wobei die Vorrichtung eine erste Beleuchtungsvorrichtung (14), die zwischen dem Element (50) und der ersten Abschirmvorrichtung (12) angeordnet ist, und eine zweite Beleuchtungsvorrichtung (24), der zwischen der zweiten Seite (52) des Elements (50) und der zweiten Abschirmvorrichtung (22) angeordnet ist, umfasst, wobei die Steuereinheit (30) mit den Beleuchtungsvorrichtungen (14,24) verbunden ist, um sie zu aktivieren/deaktivieren.

10. Vorrichtung nach einem der Ansprüche 1 bis 8, wobei die Vorrichtung eine erste Beleuchtungsvorrichtung (14), die zwischen der ersten Erfassungseinrichtung (11) und der ersten Abschirmvorrichtung (12) angeordnet ist, und eine zweite Beleuchtungsvorrichtung (24) umfasst, die zwischen der zweiten Erfassungseinrichtung (21) und der zweiten Abschirmvorrichtung (22) angeordnet ist, wobei die Steuereinheit (30) mit den Beleuchtungsvorrichtungen (14,24) verbunden ist, um sie zu aktivieren/deaktivieren.

11. Vorrichtung nach Anspruch 9 oder 10, wobei die Steuereinheit (30) gleichzeitig die erste Erfassungseinrichtung (11), die erste Beleuchtungsvorrichtung (14) und die zweite Abschirmvorrichtung (22) gemäß einem ersten Abschaltmodus deaktiviert und gleichzeitig die erste Erfassungseinrichtung (11), die erste Beleuchtungsvorrichtung (14) und die zweite Abschirmvorrichtung (22) gemäß einem ersten Abschaltmodus aktiviert, wobei die Steuereinheit (30) die zweite Erfassungseinrichtung (21), die zweite Beleuchtungsvorrichtung (24) und die erste Abschirmvorrichtung (12) gemäß einem zweiten Deaktivierungsmodus deaktiviert und gleichzeitig die zweite Erfassungseinrichtung (21), die zweite Beleuchtungsvorrichtung (24) und die erste Abschirmvorrichtung (12) gemäß einem zweiten Aktivierungsmodus aktiviert.

12. Verfahren zum Erfassen von Bildern eines zu prüfenden Elements (50), wobei eine erste Erfassungseinrichtung (11) und eine erste Abschirmvorrichtung (12), die einer ersten Seite (51) des Elements (50) zugewandt und zwischen der ersten Erfassungseinrichtung (11) und der ersten Seite (51) des Elements (50) eingefügt ist, eine zweite Erfassungseinrichtung (21) und eine zweite Abschirmvorrichtung (22), die einer zweiten Seite (52) gegenüber der ersten Seite (51) des Elements zugewandt und zwischen der zweiten Erfassungseinrichtung (11) und der zweiten Seite (52) des Elements (50) angeordnet ist, vorgesehen sind, wobei das Verfahren die Schritte umfasst:
a) Aktivieren der zweiten Abschirmvorrichtung (22) zum Abschirmen der zweiten Erfassungseinrichtung (21);
b) Aktivieren der ersten Erfassungseinrichtung (11) zum Erfassen von Bildern der ersten Seite (51);
c) Deaktivieren der ersten Erfassungseinrichtung (11);
d) Deaktivieren der zweiten Abschirmvorrichtung (22);
e) Aktivieren der ersten Abschirmvorrichtung (12) zum Abschirmen der ersten Erfassungseinrichtung (11);
f) Aktivieren der zweiten Erfassungseinrichtung (21) zum Erfassen von Bildern der zweiten Seite;
g) Deaktivieren der zweiten Erfassungseinrichtung (21);
h) Deaktivieren der ersten Abschirmvorrichtung (12),
**dadurch gekennzeichnet, dass** das Verfahren die Verwendung der ersten Abschirmvorrichtung (12) und/oder der zweiten Abschirmvorrichtung (22) mit einer optischen Vorrichtung (17) beinhaltet, die wiederum einen plattenförmigen Körper (13) umfasst, der mit farblosen und lichtverteilenden Unreinheiten versehen ist, wobei die Unreinheiten ausgelegt sind, um den optischen Weg eines Eingangslichtstrahls zu ändern, der den plattenförmigen Körper (13) durchquert, wobei die optische Vorrichtung (17) ferner mindestens eine LED (120, 121, 122, 123) umfasst, die mit dem plattenförmigen Körper (13) gekoppelt ist, wobei die mindestens eine LED (120, 121, 122, 123) den Eingangslichtstrahl erzeugt.

13. Prüfeinrichtung für zu prüfende Elemente, umfassend eine Bilderfassungsvorrichtung nach einem der Ansprüche 1 bis 11.

## Revendications

1. Appareil d'obtention d'images d'un élément (50) à inspecter, comprenant :
- une première unité optique (10), elle-même comprenant :
- des premiers moyens d'acquisition d'image (11) en regard d'un premier côté (51) dudit élément (50) et adaptés pour acquérir au moins une image dudit premier côté (51) ;
- des premiers moyens de criblage (12) interposés entre lesdits premiers moyens d'acquisition (11) et ledit premier côté (51), et adaptés pour cribler sélectivement lesdits premiers moyens d'acquisition (11) ;
- une seconde unité optique (20), elle-même comprenant :
- des seconds moyens d'acquisition d'image (21) en regard d'un second côté (52), opposé audit premier côté (51) dudit élément (50), et adaptés pour acquérir au moins une image dudit second côté (52) ;
- des seconds moyens de criblage (22) interposés entre lesdits seconds moyens d'acquisition (21) et ledit second côté (52), et adaptés pour cribler sélectivement lesdits seconds moyens d'acquisition (21) ;
- une unité de commande (30) connectée opérationnellement auxdits premiers moyens d'acquisition (12) et auxdits premiers moyens de criblage (12) et connectée opérationnellement auxdits seconds moyens d'acquisition et auxdits seconds moyens de criblage (12) ;
dans lequel ladite première unité optique (10) et ladite seconde unité optique (20) sont alignées le long d'un axe optique commun (100) ;
dans lequel ladite unité de commande (30) active lesdits premiers moyens d'acquisition (11) et lesdits seconds moyens de criblage (22) selon un premier mode d'activation, et désactive lesdits premiers moyens d'acquisition (11) et lesdits seconds moyens de criblage (22) selon un premier mode de désactivation ;
dans lequel ladite unité de commande (30) active lesdits seconds moyens d'acquisition (21) et lesdits premiers moyens de criblage (12) selon un second mode d'activation, et désactive lesdits seconds moyens d'acquisition (21) et lesdits premiers moyens de criblage (12) selon un second mode de désactivation ;
dans lequel ladite unité de commande commande ledit premier mode d'activation, ledit premier mode de désactivation, ledit second mode d'activation et ledit second mode de désactivation selon une séquence prédéterminée afin d'obtenir des images dudit premier côté (51) et dudit second côté (52) dudit élément (50), et
**caractérisé en ce que**
lesdits premiers moyens de criblage (12) et/ou lesdits seconds moyens de criblage (22) comprennent un dispositif optique (17), lui-même comprenant un corps de type plaque (13) pourvu d'impuretés incolores et diffusant la lumière, lesdites impuretés étant adaptées pour changer le chemin optique d'un faisceau de lumière d'entrée qui croise ledit corps de type plaque (13), ledit dispositif optique (17) comprenant en outre au moins une DEL (120, 121, 122, 123) couplée audit corps de type plaque (13), ladite au moins une DEL (120, 121, 122, 123) générant ledit faisceau de lumière d'entrée.

2. Appareil selon la revendication 1, dans lequel ledit dispositif optique (17) comprend un cadre périphérique (18) entourant ledit corps de type plaque (13) définissant un support pour celui-ci, ladite au moins une DEL étant installée dans ledit cadre périphérique (18).

3. Appareil selon la revendication 1, dans lequel ledit dispositif optique (17) comprend une pluralité de DEL et un cadre périphérique (18) entourant ledit corps de type plaque (13) définissant un support pour celui-ci, dans lequel les DEL de ladite pluralité de DEL sont installées dans ledit cadre périphérique (18).

4. Appareil selon la revendication 1, dans lequel ladite séquence prédéterminée se fait dans l'ordre suivant :
A - second mode de désactivation ;
B - premier mode d'activation ;
C - premier mode de désactivation ;
D - second mode d'activation.

5. Appareil selon la revendication 4, dans lequel les étapes A et B de ladite séquence sont commandées simultanément et/ou dans lequel lesdites étapes C et D de ladite séquence sont commandées simultanément.

6. Appareil selon la revendication 4, dans lequel des images dudit premier côté (51) sont obtenues au moyen de ladite première unité optique (10) dans ledit premier mode d'activation, et des images dudit second côté (51) sont obtenues au moyen de ladite seconde unité optique (20) dans ledit second mode d'activation.

7. Appareil selon l'une quelconque des revendications précédentes, dans lequel lesdits premiers moyens de criblage (12) et lesdits seconds moyens de criblage (22) sont adaptés pour contenir le champ de vision desdits seconds moyens d'acquisition (21) et desdits premiers moyens d'acquisition (11), respectivement.

8. Appareil selon l'une quelconque des revendications précédentes, dans lequel ledit premier mode d'activation, ledit premier mode de désactivation, ledit second mode d'activation, ledit second mode de désactivation se déroulent dans une séquence de temps de moins de 0,5 seconde.

9. Appareil selon l'une quelconque des revendications 1 à 8, dans lequel ledit appareil comprend un premier illuminateur (14) interposé entre ledit élément (50) et lesdits premiers moyens de criblage (12), et un second illuminateur (24) interposé entre ledit second côté (52) de l'élément (50) et lesdits seconds moyens de criblage (22), ladite unité de commande (30) étant connectée auxdits illuminateurs (14, 24) afin de les activer/désactiver.

10. Appareil selon l'une quelconque des revendications 1 à 8, dans lequel ledit appareil comprend un premier illuminateur (14) interposé entre lesdits premiers moyens d'acquisition (11) et lesdits premiers moyens de criblage (12), et un second illuminateur (24) interposé entre lesdits seconds moyens d'acquisition (21) et lesdits seconds moyens de criblage (22), ladite unité de commande (30) étant connectée auxdits illuminateurs (14, 24) pour les activer/désactiver.

11. Appareil selon la revendication 9 ou 10, dans lequel ladite unité de commande (30) désactive simultanément lesdits premiers moyens d'acquisition (11), ledit premier illuminateur (14) et lesdits seconds moyens de criblage (22) selon un premier mode de désactivation, et active simultanément lesdits premiers moyens d'acquisition (11), ledit premier illuminateur (14) et lesdits seconds moyens de criblage (22) selon un premier mode d'activation, dans lequel ladite unité de commande (30) désactive lesdits seconds moyens d'acquisition (21), ledit second illuminateur (24) et lesdits premiers moyens de criblage (12) selon un second mode de désactivation, et active simultanément lesdits seconds moyens d'acquisition (21), ledit second illuminateur (24) et lesdits premiers moyens de criblage (12) selon un second mode d'activation.

12. Procédé d'acquisition d'images d'un élément (50) à inspecter, dans lequel sont ménagés des premiers moyens d'acquisition (11) et des premiers moyens de criblage (12) en regard d'un premier côté (51) dudit élément (50) et interposés entre lesdits premiers moyens d'acquisition (11) et ledit premier côté (51) dudit élément (50), des seconds moyens d'acquisition (21) et des seconds moyens de criblage (22) en regard d'un second côté (52), opposé audit premier côté (51) dudit élément et interposés entre lesdits seconds moyens d'acquisition (11) et ledit second côté (52) dudit élément (50), ledit procédé comprenant les étapes de :
a) activation desdits seconds moyens de criblage (22) pour criblage desdits seconds moyens d'acquisition (21) ;
b) activation desdits premiers moyens d'acquisition (11) pour acquisition d'images dudit premier côté (51) ;
c) désactivation desdits premiers moyens d'acquisition (11) ;
d) désactivation desdits seconds moyens de criblage (22) ;
e) activation desdits premiers moyens de criblage (12) pour criblage desdits premiers moyens d'acquisition (11) ;
f) activation desdits seconds moyens d'acquisition (21) pour acquisition d'images dudit second côté ;
g) désactivation des seconds moyens d'acquisition (21) ;
h) désactivation des premiers moyens de criblage (12),
**caractérisé en ce que** ledit procédé inclut l'utilisation desdits premiers moyens de criblage (12) et/ou desdits seconds moyens de criblage (22) comprenant un dispositif optique (17), lui-même comprenant un corps de type plaque (13) pourvu d'impuretés incolores et diffusant la lumière, lesdites impuretés étant adaptées pour changer le chemin optique d'un faisceau de lumière d'entrée qui croise ledit corps de type plaque (13), ledit dispositif optique (17) comprenant en outre au moins une DEL (120, 121, 122, 123) couplée audit corps de type plaque (13), ladite au moins une DEL (120, 121, 122, 123) générant ledit faisceau de lumière d'entrée.

13. Equipement d'essai pour éléments à inspecter comprenant un appareil d'acquisition d'image selon l'une quelconque des revendications 1 à 11.
